# EUROPEAN PATENT APPLICATION

(11) **EP 2 255 961 A1**
(43) Date of publication of application: **01.12.2010**
(21) Application number: 10162851.9
(22) Date of filing: 14.05.2010
(51) Int. Cl.: B32B 27/06, B32B 27/08, B32B 27/20, B32B 33/00, H01G 9/07

(54) **Composite structures for high energy-density capacitors and other device**

(30) Priority: 26.05.2009 US 471573
(71) Applicant: General Electric Company, Schenectady, NY 12345 (US)
(72) Inventor: Tan, Daniel Qi, Rexford, NY 12148 (US); Irwin, Patricia Chapman, Altamont, NY 12009 (US); Cao, Yang, Niskayuna, NY 12309 (US)
(74) Representative: Gray, Thomas

(57) **Abstract**

In one aspect of the present invention, an article is described, including a polymer layer; and a composite layer disposed on the polymer layer. The composite layer includes a thermoplastic polymer, which contains at least one inorganic component having selected dimensions; wherein the largest dimension of the inorganic component is less than about 1 micrometer. The composite layer has a dielectric constant, which is at least about 30 percent greater than the dielectric constant of the polymer layer. The article has a breakdown strength of at least about 150 kV/mm. Related devices are also described.

## Description

### BACKGROUND

The invention relates generally to an article having a high breakdown strength and comprising a composite layer having a high dielectric constant.

Polymers with high resistivity, high permittivity, low dissipation factors and high electric field breakdown strengths (Vb) have important applications as dielectrics in electronic devices, such as a capacitor. The electronic industry is cost- and performance-driven, and constantly increasing demands are made on materials to lower cost, and improve their reliability and performance. Polymer based devices have long been of interest because manufacturing technologies associated with extrusion or solution casting of polymer films can be readily combined with thin film metallization techniques, to yield devices that are flexible and economical, and which can be manufactured into very large electronic devices.

Polymer films such as polycarbonate, polypropylene and polyester have been the insulating media of choice for fabrication of thin film electrostatic capacitors for operation in the kilovolt range. Polymer based capacitors have been the capacitor of choice for many power electronics and pulse power applications, because of their inherent low dielectric losses, excellent high frequency response, low dissipation factor (DF), low equivalent series resistance (ESR), and high voltage capabilities. Polymer based capacitors have almost no capacitance coefficient with applied voltage, and metallic migration or mechanical cracks do not occur, as observed in the case of ceramic based capacitors.

Over the last decade, significant increases in capacitor reliability have been achieved through a combination of advanced manufacturing techniques and new materials. In addition, polymer-based electronic devices, such as a capacitor, would offer compact capacitor structure, self-clearing capability, longer lifetime, and higher energy density. These advantages, coupled with the advantage of reduced size, simplicity, and cost of manufacturing, enable the wide use of these polymer based capacitors in the power electronics industry.

Polymer composites have been employed to attain high dielectric constants in various devices, using large volumes of fillers. The disadvantage, however, is that some of these devices might exhibit an undesirable reduction in breakdown strength and mechanical properties, such as impact strength and ductility. Moreover, the addition of fillers increases the brittleness of the composite material, thereby giving rise to processing and fabrication problems.

Polymer based capacitors are lightweight and compact and, hence, are attractive for various land based and space applications. However, most of the dielectric polymers are characterized by low energy densities (<5 J/cc), and/or have low breakdown strengths (<450 kV/mm), which may limit the operating voltage of the capacitor. Other disadvantages are sometimes associated with these types of capacitors as well, relating to thermal stability and reduced lifetime, for example. In order to achieve high energy density, it may be desirable to have both high dielectric constant and high breakdown strength. A trade-off between these two properties may not be advantageous. Most dielectric polymers that exhibit high breakdown strength have a relatively low dielectric constant. The highest breakdown strength observed is about 800kV/mm for high quality polypropylene thin film that has a dielectric constant of about 2.2.

There is a need for energy storage devices, such as capacitors, that are utilized in high energy density power conversion applications, to withstand high voltage and high temperature environments. In addition, the energy storage devices need to display a high breakdown voltage, along with a high dielectric constant, that satisfies the electrical, reliability, and processing requirements for incorporating capacitors into a printed wiring board.

Therefore, it is important to identify an article with a considerably high dielectric constant and relatively high breakdown strength. There is a need for articles that would address the aforementioned problems and meet the current demands of electronics industry applications. Further, there is a need for simpler and versatile methods to prepare high quality, polymer-based articles for use in various electronic devices, e.g., those which employ capacitors.

### BRIEF DESCRIPTION

One aspect of the present invention provides an article that includes a polymer layer; and a composite layer disposed on the polymer layer. The composite layer includes a thermoplastic polymer, which contains at least one inorganic component having selected dimensions; wherein the largest dimension of the inorganic component is less than about 1 micrometer. The composite layer has a dielectric constant, which is at least about 30 percent greater than the dielectric constant of the polymer layer. The article has a breakdown strength of at least about 150kV/mm.

According to another aspect of the present invention, an article is disclosed, that includes a polymer layer comprising at least one polymer selected from polyimides (e.g., polyetherimide, cyano modified polyetherimide and the like), cyanoethyl cellulose, cellulose triacetate, polyvinylidine hexafluoropropylene copolymers, polypropylene, polycarbonate and a composite layer comprising a thermoplastic polymer and an inorganic component. The article has a breakdown strength of at least about 150 kV/mm.

Another aspect of the present invention provides a capacitor that includes two conductors separated by an insulating structure, wherein the insulating structure includes a polymer layer; and a composite layer disposed on the polymer layer. The composite layer includes a thermoplastic polymer that contains at least one inorganic component having selected dimensions; wherein the largest dimension of the inorganic component is less than about 1 micrometer. The composite layer has a dielectric constant, which is at least about 30 percent greater than the dielectric constant of the polymer layer; and the article has a breakdown strength of at least about 150kV/mm.

### BRIEF DESCRIPTION OF THE DRAWINGS

There follows a detailed description of embodiments of the invention by way of example only with reference to the accompanying drawings, in which:
FIG. 1 is a cross-sectional view of a portion of the article, in accordance with one aspect of the invention.
FIG. 2 is a cross-sectional view of a portion of the article, in accordance with one aspect of the invention.
FIG. 3 is a plot of the breakdown strength versus the thickness of the composite film, in accordance with one aspect of the invention.

### DETAILED DESCRIPTION

While only certain features of the invention have been illustrated and described herein, many modifications and changes will occur to those skilled in the art. It is, therefore, to be understood that the appended claims are intended to cover all such modifications and changes as fall within the true spirit of the invention. In the specification and claims, reference will be made to a number of terms, which have the following meanings.

The singular forms "a", "an" and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be".

"Optional" or "optionally" means that the subsequently described event or circumstance may or may not occur, and that the description includes instances where the event occurs and instances where it does not.

Some of the dielectric properties considered herein are dielectric constant, and breakdown strength. The "dielectric constant" of a dielectric material is a ratio of the capacitance of a capacitor, in which the space between and around the electrodes is filled with the dielectric, to the capacitance of the same configuration of electrodes in a vacuum. As used herein, "breakdown strength" refers to a measure of the dielectric breakdown resistance of a polymer (dielectric) material under an applied AC or DC voltage. The applied voltage prior to breakdown is divided by the thickness of the dielectric (polymer) material to provide the breakdown strength value. It is generally measured in units of potential difference over units of length, such as kilovolts per millimeter (kV/mm). As used herein, the term "high temperatures" refers to temperatures above about 100 degrees Celsius (°C), unless otherwise indicated.

As noted, in one embodiment, the present invention provides an article that includes a polymer layer and a composite layer disposed on the polymer layer. The composite layer comprises a thermoplastic polymer, which contains at least one inorganic component having selected dimensions. The largest dimension of the inorganic component is less than about 1 micrometer. The composite layer has a dielectric constant which is at least about 30 percent greater than the dielectric constant of the polymer layer. The article has a breakdown strength of at least about 150kV/mm.

A variety of polymers may be employed as the polymer layer according to various embodiments of this invention. In one embodiment, the polymer layer includes a thermoplastic polymer or a thermoset polymer. The polymer layer can include blends of thermoplastic polymers, or blends of thermoplastic polymers with thermosetting polymers. In another embodiment, the polymer layer includes a crystalline polymer or an amorphous polymer. Non-limiting examples of thermoplastic polymers include polyvinyl chloride, polyolefins, polyesters, polyamides, polysulfones, polyimides, polyether sulfones, polyphenylene sulfides, polyether ketones, polyether ether ketones, ABS resins, polystyrenes, polybutadiene, polyacrylates, polyaklylacrylates, polyacrylonitrile, polyacetals, polycarbonates, polyphenylene ethers (e.g., blended with polystyrene or rubber-modified polystyrene), ethylene-vinyl acetate copolymers, polyvinyl acetate, liquid crystal polymers, ethylene-tetrafluoroethylene copolymers, aromatic polyesters, polyvinyl fluoride, polyvinylidene fluoride, polyvinylidene chloride, tetrafluoroethylene, polyimide, polyetherimide, cyano modified polyetherimide, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE), polyvinylidine hexafluoropropylene copolymers P(VDF-HFE) and poly(vinylidine fluoride-trifluoroethylene-chlorofluoroethylene) terpolymer, cyanoethyl pullulan, cyanoethyl polyvinylalcohol, cyanoethyl hydroxyethyl cellulose, cyanoethyl sucrose, cyanoethyl-containing organopolysiloxane, or cyanoethyl cellulose.

Physical blends of various polymers can also be used. Moreover, various copolymers, such as star block copolymers, graft copolymers, alternating block copolymers or random copolymers, ionomers, dendrimers, and reaction products of the various polymers, may also be used. Different types of polymers require different processing, and a person skilled in the art could readily identify the processing conditions that would be required for a particular polymer or polymer blend.

Non-limiting examples of thermosetting polymers that can be blended with the thermoplastic polymers include resins of epoxy/amine, epoxy/anhydride, isocyanate/amine, isocyanate/alcohol, unsaturated polyesters, vinyl esters, unsaturated polyester and vinyl ester blends, unsaturated polyester/urethane hybrid resins, polyurethane-ureas, reactive dicyclopentadiene (DCPD) resins, reactive polyamides, polyurethanes such as urethane polyesters, silicone polymers, phenolic polymers, amino polymers, epoxy polymers, bismaleimides, polyphenylene ethers (thermosetting grades); as well as combinations comprising at least one of the foregoing.

In one embodiment, the average molecular weight of the polymer for the polymer layer is in the range from about 10,000 to about 100,000. In one embodiment, the polymer layer exhibits a mechanical strength of at least about 5,000 psi, as measured using ASTM D 882-02.

The article includes a composite layer. As used herein, the term "composite" is meant to refer to a material made of more than one component. Thus, in this embodiment, the composite layer is a polymer composite that contains a polymer or copolymer and at least one inorganic constituent e.g., a filler material.

In one embodiment, the composite layer includes a thermoplastic polymer, which contains at least one inorganic component. The thermoplastic polymer includes, but is not limited to, the various materials described previously, with respect to the polymer layer. As alluded to above, many physical blends, copolymers, and reaction products of the various polymers may also be used. In one embodiment, the polymer of the polymer layer and the thermoplastic polymer of the composite layer may be the same polymer. In another embodiment, the polymer of the polymer layer and the thermoplastic polymer of the composite layer may be different polymers.

The composite layer includes at least one inorganic component. In one embodiment, the inorganic component includes a ceramic material. In another embodiment, the inorganic component includes at least one selected from borides, carbides, silicates, chalcogenides, hydroxides, metals, metal oxides, nitrides, perovskites, phosphides, sulfides, powdered ferroelectric materials, and silicides. Non-limiting examples of the inorganic component include barium titanate (BaTiO₃), boron nitride, aluminum oxide (for example, alumina or fumed alumina), strontium titanate, barium strontium titanate, titania, zirconia, magnesia, zinc oxide, cesium oxide, yttria, silicon oxide (for example silica, fumed silica, colloidal silica, dispersions of colloidal silica, and precipitated silica), lead zirconate, lead zirconate titanate, cerium oxide, copper oxide. calcium oxide, niobium pentoxide, tantalum pentoxide, lead zirconium oxide, lead zirconium titanium oxide (Pb(ZrₓTi₁₋ₓ)O₃ where x≥0.01), lanthanum doped lead zirconium titanium oxide, lanthanum doped lead zirconium oxide, SrBi₂Ta₂O₉, PbNi_{1/3}Nb_{2/3}TiO₃-PbTiO₃, PbMg_{1/3}Nb_{2/3}TiO₃-PbTiO₃, NaNbO₃ (K,Na)(Nb,Ta)O₃; KNbO₃; BaZrO₃; Na_{0.25}K_{0.25}Bi_{0.5}TiO₃; Ag(Ta,Nb)O₃; Na_{0.5}Bi_{0.5}TiO₃-K_{0.5}Bi_{0.5}TiO₃-BaTiO₃ strontium-doped lanthanum manganate, calcium copper titanate (CaCu₃Ti₄O₁₂), cadmium copper titanate (CdCu₃Ti₄O₁₂), lanthanum doped CaMnO₃, and (Li, Ti) doped NiO, BaFe₁₂O₁₉, (Bi,La,Tb)(Fe,Mn,Dy,Pr)O₃, Ba₃CO₂Fe₂₄O₄₁, Y₃Fe₅O₁₂, NIZnFe₂O₄, CU_{0.2}Mg_{0.4}Zn_{0.4}Fe₂O₄, Fe₃O₄, (Cu,Ni,Zn)Fe₂O₄, TbMn₂O₅, PbNi_{1/33}Nb_{2/3}TiO₃-CuNiZn, and BaTiO₃-NiZnFe₂O₄.

In one embodiment, the inorganic component is at least one selected from barium titanate (BaTiO₃), boron nitride, aluminum oxide (alumina), strontium titanate, barium strontium titanate, titania, zirconia, magnesia, zinc oxide, cesium oxide, yttria, silica, cerium oxide, copper oxide, calcium oxide, niobium pentoxide, tantalum pentoxide, and lead zirconium oxide. In another embodiment, the inorganic component is at least one selected from lanthanum doped lead zirconium titanium oxide, PbNi_{1/3}Nb_{2/3}TiO₃-PbTiO₃, barium titanate (BaTiO₃), aluminum oxide, and barium strontium titanate.

The inorganic component can be in a variety of shapes or forms. Examples include particulates (e.g., substantially spherical particles), fibers, platelets, flakes, whiskers, or rods. The inorganic component can vary in size, but in some specific embodiments, has a particle size less than about 1 micrometer.

In one embodiment, the inorganic component (e.g., a particle) may be used in a form with a specified particle size, particle size distribution, average particle surface area, particle shape, and particle cross-sectional geometry. The inorganic component can have cross-sectional geometries that can be circular, ellipsoidal, triangular, rectangular, polygonal, or a combination comprising at least one of the foregoing geometries. In one embodiment, the inorganic component has selected dimensions such that the largest dimension is less than about 1 micrometer. In another embodiment, the largest dimension of the inorganic component is less than about 500 nanometers. In another embodiment, the largest dimension of the inorganic component is less than about 100 nanometers. The dimension may be a diameter, edge of a face, length, or the like. In yet another embodiment, the largest dimension of the inorganic component is in the range from about 10 nanometers to about 500 nanometers. In one embodiment, the inorganic component can be a fiber or a platelet having an aspect ratio of greater than about 1. The inorganic component may be an aggregate or an agglomerate before incorporation into the composite layer. As used herein, an "aggregate" includes more than one inorganic component particle in physical contact with one another, while an "agglomerate" may be defined as more than one aggregate in physical contact with one another.

In one embodiment, the inorganic component may be present in the composite layer in an amount of at least about 5 weight percent, based on the total weight of the composite layer. In another embodiment, the inorganic component may be present in the composite layer in an amount from about 5 weight percent to about 90 weight percent based on the total weight of the composite layer. In yet another embodiment, the inorganic component may be present in the composite layer in an amount from about 30 weight percent to about 70 weight percent based on the total weight of the composite layer.

The composite layer can be prepared by various methods. The methods include, but are not limited to, melt blending, solution blending, or the like, or a combination comprising at least one of the foregoing methods of blending. Melt blending involves the use of shear force, extensional force, compressive force, ultrasonic energy, electromagnetic energy, thermal energy or a combination comprising at least one of the foregoing forces or forms of energy. Melt blending is usually carried out with processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or a combination comprising at least one of the foregoing.

In one embodiment, the composite layer has a breakdown strength at least about 10 percent (%) less than the breakdown strength of the polymer layer. In another embodiment, the composite layer has a breakdown strength at least about 50 percent less than the breakdown strength of the polymer layer.

In one embodiment, the composite layer has a dielectric constant at least about 30 percent greater than the dielectric constant of the polymer layer. In another embodiment, the composite layer has a dielectric constant at least about 60 percent greater than the dielectric constant of the polymer layer.

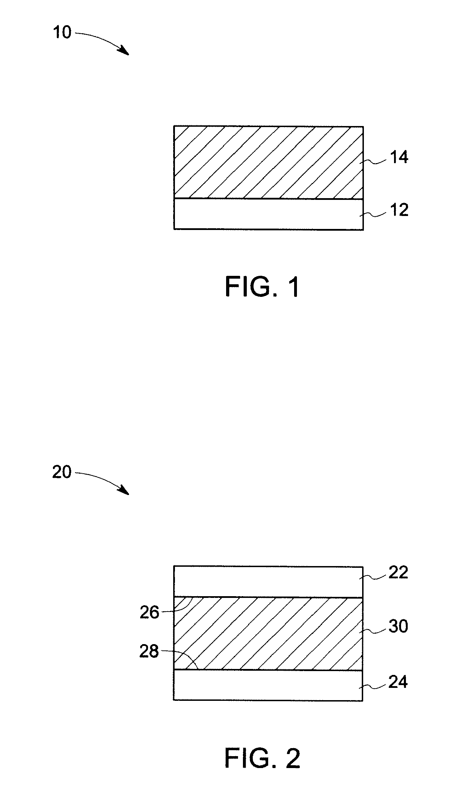

A schematic representation of one embodiment of the invention is shown in FIG. 1, for the article (10). The polymer layer (12) {also referred to as the "capping layer"} is in contact with the composite layer (14).

In another embodiment, the polymer layer is in contact with a first surface of the composite layer, and a second polymer layer is in contact with a second surface of the composite layer, said second surface of the composite layer being substantially opposite said first surface of the composite layer. FIG 2 represents a schematic representation of the article (20), wherein polymer layer (22) is in contact with a first surface (26) of the composite layer (30). The second polymer layer (24) is in contact with a second surface (28) of composite layer (30). Thus, in this embodiment, the article includes the composite layer being "sandwiched" between the first polymer layer and the second polymer layer.

Various methods are known in the art to form the polymer layer on the composite layer. In one embodiment, the polymer layer can be deposited on a selected surface(s) of the composite layer by methods such as chemical vapor deposition (CVD), spin coating, solvent cast, dip coating, atomic layer deposition (ALD), expanding thermal plasma (ETP), ion plating, plasma enhanced chemical vapor deposition (PECVD), metal organic chemical vapor deposition (MOCVD) (also called Organometallic Chemical Vapor Deposition (OMCVD)), metal organic vapor phase epitaxy (MOVPE), physical vapor deposition processes such as sputtering, reactive electron beam (e-beam) deposition, and plasma spray. Any void or defect at the interface between the polymer layer and the composite layer can cause a reduction in the dielectric properties of the article, so care should be taken to form a continuous, uniform polymer layer.

In one embodiment, the composite layer has a thickness, which is at least about 50% greater than the thickness of the polymer layer. In another embodiment, the composite layer has a thickness in the range from about 100% to about 400% the thickness of the polymer layer.

In one embodiment, the article has a dielectric constant in the range from about 3 to about 100. In one embodiment, the article has a breakdown strength of at least about 150 kV/mm (kilovolts per millimeter). In another embodiment, the article has a breakdown strength in the range from about 150 kV/mm to about 700 kV/mm. In still another embodiment, the article has a breakdown strength in the range from about 300 kV/mm to about 500 kV/mm.

A primary advantage for embodiments of this invention relates to the ability of the article to function well in a higher energy environment. The higher electrical breakdown strength of the polymer layer can withstand the effect of the higher voltage drop, with respect to the higher permittivity of the composite layer. In this manner, the possibility of failure of the composite layer under low voltage conditions is minimized or eliminated. In another embodiment, the combination of the polymer layer and the composite layer enables the article to withstand an optimum breakdown strength, as well as exhibiting high permittivity.

### EXAMPLES

The following examples illustrate methods and embodiments in accordance with the invention, and as such, should not be construed as imposing limitations upon the claims.

Unless specified otherwise, all ingredients may be commercially available from such common chemical suppliers as Alpha Aesar, Inc. (Ward Hill, Massachusetts), Sigma Aldrich (St. Louis, Missouri), Spectrum Chemical Mfg. Corp. (Gardena, California), and the like.

Alumina particles with an average particle size of 45 nm from Alpha Aesar, Inc were compounded into a cyanoethyl pullulan(CRS^{™}) polymer resin (from Shin-Etsu Chemical Co. Ltd.) at 5 weight percent, based on the total weight of the resin and the alumina, to form the nanocomposite. The cyanoethyl pullulan polymer resin was added to a solvent in an amount of 10 wt %, based on the total weight of the solution of cyanoethyl pullulan polymer resin and the solvent. The solvent used for the solution casting was dimethylformamide (DMF). The nanocomposite was then dissolved in a solvent and cast onto a glass substrate to form a film. The film was then dried at about 150 °C for about 2 hours. At the end of the stipulated time, a layer of polyetherimide was deposited on the composite film, using a spin coating deposition method to form a capping layer. The composite film, along with the capping layer, was then dried at about 150 °C for about 2 hours, to form a capped composite film. The capped composite film was peeled from the silicon wafer and dried at about 150 °C overnight in a vacuum oven. The film thickness, after casting and drying, was 5 to 20 microns. A polyetherimide -alumina composite layer, with polyetherimide as the capping layer, was also made using the method as described above.

The measurements of dielectric constant were performed at room temperature, at a frequency range of 100 to 105 Hz, using dielectric analyzer model HP4285A, commercially available from Hewlett Packard Corporation.

Dielectric breakdown strength was measured, following ASTM D149 (method A). The film was immersed in silicon oil, and a direct-current (DC) voltage was applied using a high voltage supply. A sphere-plane setup was used for the breakdown measurements. The diameter of the top electrode, a stainless steel sphere, was ¼ inch (6.25 millimeters), and the bottom electrode was a stainless steel plate. The spherical electrode was connected to a high potential, whereas the plane electrode was connected to ground potential. The test was performed at room temperature, using a stepwise voltage. Each voltage step was 500 V/second, before the next higher voltage was applied. The process proceeded until breakdown occurred. Breakdown is said to occur when the sample shows a sharp current increase. Breakdown strength was calculated as the electrical voltage, divided by the sample thickness.

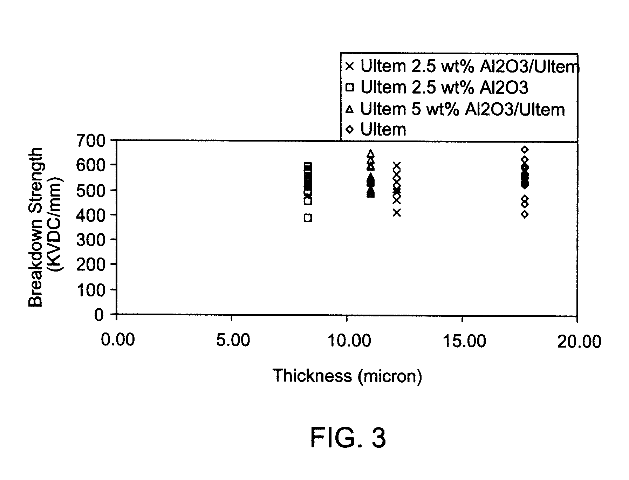

FIG 3 shows the breakdown strength of different materials such as the "pure" polymer, the pure composite material (polymer + inorganic component), and Ultem^{®}PEI based nanocomposites containing two different alumina concentrations (2.5 weight percent and 5 weight percent), with the Ultem^{®} capping layer. Ultem^{®}PEI based nanocomposites containing two different alumina concentrations (2.5 weight percent and 5 weight percent), and Ultem PEI^{®} or Ultem^{®} based composite films were deposited on silicon wafers using a spin coating process, and dried at about 150°C. Ultem^{®} film was used as the capping layer, and deposited on the dried Ultem^{®} - alumina composite film. The total film thicknesses was controlled in the range of 5-20 micrometers. As observed from FIG.3, the pure polymer, i.e., the Ultem^{®} material, had the highest average breakdown strength of about 550, while the pure composite, i.e., the Ultem^{®} material + 2.5 weight percent Al₂O₃, was the lowest. The composite films with the capping layer were found to have higher average breakdown strength than the pure composite layer. However, the bilayer with the composite comprising 5 weight percent Al₂O₃ was found to have an average breakdown strength which was substantially equivalent to that of the pure polymer, while still retaining the high dielectric constant value. It may be observed that the bilayer system, with the composite comprising 2.5 weight percent of Al₂O₃, did not show a significant increase in the breakdown strength.

While the invention has been described with reference to exemplary embodiments, it will be understood by those skilled in the art that various changes may be made, and equivalents may be substituted for elements thereof, without departing from the scope of the invention. In addition, many modifications may be made to adapt a particular situation or material to the teachings of the invention, without departing from the essential scope thereof. Therefore, it is intended that the invention not be limited to the particular embodiments disclosed as the best mode contemplated for carrying out this invention, but that the invention will include all embodiments falling within the scope of the appended claims.

Various aspects and embodiments of the present invention are defined by the following numbered clauses:
1. An article, comprising:
   a polymer layer; and
   a composite layer disposed on the polymer layer, comprising a thermoplastic polymer, which contains at least one inorganic component having selected dimensions; wherein the largest dimension of the inorganic component is less than about 1 micrometer;
   said composite layer having a dielectric constant which is at least about 30 percent greater than the dielectric constant of the polymer layer; and
   wherein the article has a breakdown strength of at least about 150kV/mm.
2. The article of clause 1, wherein the polymer layer comprises a thermoplastic polymer or a thermoset polymer.
3. The article of clause 1, wherein the polymer layer comprises a crystalline polymer or an amorphous polymer
4. The article of clause 1, wherein the polymer layer is at least one selected from polyvinyl chloride, polyolefins, polyesters, polyamides, polysulfones, polyimidespolyether sulfones, polyphenylene sulfides, polyether ketones, polyether ether ketones, ABS resins, polystyrenes, polybutadiene, polyacrylates, polyaklylacrylates, polyacrylonitrile, polyacetals, polycarbonates, polyphenylene ethers, ethylene-vinyl acetate copolymers, polyvinyl acetate, liquid crystal polymers, ethylene-tetrafluoroethylene copolymers, aromatic polyesters, polyvinyl fluoride, polyvinylidene fluoride, polyvinylidene chloride, tetrafluoroethylene, polyetherimide, cyano modified polyetherimide, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE), polyvinylidine hexafluoropropylene copolymers P(VDF-HFE), poly(vinylidine fluoride-trifluoroethylene-chlorofluoroethylene) terpolymers, cyanoethyl pullulan, cyanoethyl polyvinylalcohol, cyanoethyl hydroxyethyl cellulose, cyanoethyl sucrose, cyanoethyl-containing organopolysiloxane, a cyanoethyl cellulose, and mixtures, copolymers, and reaction products, comprising at least one of the foregoing polymers.
5. The article of clause 1, wherein the thermoplastic polymer of the composite layer comprises at least one selected from polyvinyl chloride, polyolefins, polyesters, polyamides, polysulfones, polyimides, polyether sulfones, polyphenylene sulfides, polyether ketones, polyether ether ketones, ABS resins, polystyrenes, polybutadiene, polyacrylates, polyaklylacrylates, polyacrylonitrile, polyacetals, polycarbonates, polyphenylene ethers, ethylene-vinyl acetate copolymers, polyvinyl acetate, liquid crystal polymers, ethylene-tetrafluoroethylene copolymers, aromatic polyesters, polyvinyl fluoride, polyvinylidene fluoride, polyvinylidene chloride, tetrafluoroethylene, polyimide, polyetherimide, cyano modified polyetherimide, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE), polyvinylidine hexafluoropropylene copolymers P(VDF-HFE) and poly(vinylidine fluoride-trifluoroethylene-chlorofluoroethylene) terpolymer, cyanoethyl pullulan, cyanoethyl polyvinylalcohol, cyanoethyl hydroxyethyl cellulose, cyanoethyl sucrose, cyanoethyl-containing organopolysiloxane, a cyanoethyl cellulose, and mixtures, copolymers, and reaction products comprising at least one of the foregoing polymers.
6. The article of clause 1, wherein the inorganic component comprises at least one ceramic material.
7. The article of clause 1, wherein the inorganic component is at least one selected from borides, carbides, silicates, chalcogenides, hydroxides, metals, metal oxides, nitrides, perovskites, phosphides, sulfides, powdered ferroelectric materials, and silicides.
8. The article of clause 1, wherein the inorganic component is at least one selected from barium titanate (BaTiO₃), boron nitride, aluminum oxide, strontium titanate, barium strontium titanate, titania, zirconia, magnesia, zinc oxide, cesium oxide, yttria, silica, lead zirconate, lead zirconate titanate, cerium oxide, copper oxide. calcium oxide, niobium pentoxide, tantalum pentoxide, and lead zirconium oxide.
9. The article of clause 1, wherein the inorganic component is in the shape of a substantially spherical particle, and has an average particle size less than about 1 micrometer.
10. The article of clause 1, wherein the inorganic component is present in an amount of at least about 10 weight percent (%), based on the total weight of the composite layer.
11. The article of clause 1, wherein the composite layer has a breakdown strength at least about 10 percent less than the breakdown strength of the polymer layer.
12. The article of clause 1, wherein the composite layer has a thickness which is at least about 50 percent greater than the thickness of the polymer layer.
13. The article of clause 1, having a dielectric constant in the range from about 3 to about 100.
14. The article of clause 1, having a breakdown strength in the range from about 150 kV/mm to about 700 kV/mm.
15. The article of clause 1, wherein the polymer layer is in contact with a first surface of the composite layer, and a second polymer layer is in contact with a second surface of the composite layer, said second surface of the composite layer being substantially opposite said first surface of the composite layer;
   and wherein the dielectric constant of the composite layer is at least about 30 percent greater than the dielectric constant of the second polymer layer.
16. The article of clause 1, wherein the polymer layer exhibits a mechanical strength of at least about 5,000 psi, as measured according to ASTM D 882-02.
17. An article, comprising:
   a polymer layer comprising at least one polymer selected from polyetherimide, cyano modified polyetherimide, and cyanoethyl cellulose;
   a composite layer comprising a thermoplastic polymer and an inorganic component selected from lanthanum doped lead zirconium titanium oxide, PbNi_{1/3}Nb_{2/3}TiO₃-PbTiO₃, barium titanate (BaTiO₃), and combinations thereof; wherein
      the article has a breakdown strength of at least about 150 kV/mm.
18. A capacitor, comprising two conductors separated by an insulating structure, wherein the insulating structure comprises:
   a polymer layer; and
   a composite layer disposed on the polymer layer, comprising a thermoplastic polymer which contains at least one inorganic component having selected dimensions; wherein the largest dimension of the inorganic component is less than about 1 micrometer;
   said composite layer having a dielectric constant which is at least about 30 percent greater than the dielectric constant of the polymer layer; and
   wherein the insulating structure has a breakdown strength of at least about 150kV/mm.

## Claims

1. An article, comprising:
a polymer layer; and
a composite layer disposed on the polymer layer, comprising a thermoplastic polymer, which contains at least one inorganic component having selected dimensions; wherein the largest dimension of the inorganic component is less than about 1 micrometer;
said composite layer having a dielectric constant which is at least about 30 percent greater than the dielectric constant of the polymer layer; and
wherein the article has a breakdown strength of at least about 150kV/mm.

2. The article of claim 1, wherein the polymer layer comprises a thermoplastic polymer or a thermoset polymer.

3. The article of claim 1, wherein the polymer layer comprises a crystalline polymer or an amorphous polymer

4. The article of claim 1, wherein the polymer layer is at least one selected from polyvinyl chloride, polyolefins, polyesters, polyamides, polysulfones, polyimidespolyether sulfones, polyphenylene sulfides, polyether ketones, polyether ether ketones, ABS resins, polystyrenes, polybutadiene, polyacrylates, polyaklylacrylates, polyacrylonitrile, polyacetals, polycarbonates, polyphenylene ethers, ethylene-vinyl acetate copolymers, polyvinyl acetate, liquid crystal polymers, ethylene-tetrafluoroethylene copolymers, aromatic polyesters, polyvinyl fluoride, polyvinylidene fluoride, polyvinylidene chloride, tetrafluoroethylene, polyetherimide, cyano modified polyetherimide, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE), polyvinylidine hexafluoropropylene copolymers P(VDF-HFE), poly(vinylidine fluoride-trifluoroethylene-chlorofluoroethylene) terpolymers, cyanoethyl pullulan, cyanoethyl polyvinylalcohol, cyanoethyl hydroxyethyl cellulose, cyanoethyl sucrose, cyanoethyl-containing organopolysiloxane, a cyanoethyl cellulose, and mixtures, copolymers, and reaction products, comprising at least one of the foregoing polymers.

5. The article of claim 1 or 2 wherein the thermoplastic polymer of the composite layer comprises at least one selected from polyvinyl chloride, polyolefins, polyesters, polyamides, polysulfones, polyimides, polyether sulfones, polyphenylene sulfides, polyether ketones, polyether ether ketones, ABS resins, polystyrenes, polybutadiene, polyacrylates, polyaklylacrylates, polyacrylonitrile, polyacetals, polycarbonates, polyphenylene ethers, ethylene-vinyl acetate copolymers, polyvinyl acetate, liquid crystal polymers, ethylene-tetrafluoroethylene copolymers, aromatic polyesters, polyvinyl fluoride, polyvinylidene fluoride, polyvinylidene chloride, tetrafluoroethylene, polyimide, polyetherimide, cyano modified polyetherimide, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE), polyvinylidine hexafluoropropylene copolymers P(VDF-HFE) and poly(vinylidine fluoride-trifluoroethylene-chlorofluoroethylene) terpolymer, cyanoethyl pullulan, cyanoethyl polyvinylalcohol, cyanoethyl hydroxyethyl cellulose, cyanoethyl sucrose, cyanoethyl-containing organopolysiloxane, a cyanoethyl cellulose, and mixtures, copolymers, and reaction products comprising at least one of the foregoing polymers.

6. The article of any of the preceding claims, wherein the inorganic component comprises at least one ceramic material.

7. The article of claim 1, wherein the inorganic component is at least one selected from ceramic material, borides, carbides, silicates, chalcogenides, hydroxides, metals, metal oxides, nitrides, perovskites, phosphides, sulfides, powdered ferroelectric materials, and silicides.

8. The article of any of the preceding claims, wherein the inorganic component is at least one selected from barium titanate (BaTiO₃), boron nitride, aluminum oxide, strontium titanate, barium strontium titanate, titania, zirconia, magnesia, zinc oxide, cesium oxide, yttria, silica, lead zirconate, lead zirconate titanate, cerium oxide, copper oxide. calcium oxide, niobium pentoxide, tantalum pentoxide, and lead zirconium oxide.

9. The article of any of the preceding claims, wherein the inorganic component is in the shape of a substantially spherical particle, and has an average particle size less than about 1 micrometer.

10. The article of any of the preceding claims, wherein the inorganic component is present in an amount of at least about 10 weight percent (%), based on the total weight of the composite layer.

11. The article of any of the preceding claims, wherein the composite layer has a breakdown strength at least about 10 percent less than the breakdown strength of the polymer layer.

12. The article of any of the preceding claims, wherein the composite layer has a thickness which is at least about 50 percent greater than the thickness of the polymer layer.

13. The article of any of the preceding claims, having a dielectric constant in the range from about 3 to about 100.

14. The article of the preceding claims, having a breakdown strength in the range from about 150 kV/mm to about 700 kV/mm.

15. The article of any of the preceding claims, wherein the polymer layer is in contact with a first surface of the composite layer, and a second polymer layer is in contact with a second surface of the composite layer, said second surface of the composite layer being substantially opposite said first surface of the composite layer;
and wherein the dielectric constant of the composite layer is at least about 30 percent greater than the dielectric constant of the second polymer layer.
